# EUROPÄISCHE PATENTSCHRIFT

(11) **EP 1 075 324 B1**
(45) Veröffentlichungstag und Bekanntmachung des Hinweises auf die Patenterteilung: **18.06.2003**
(21) Anmeldenummer: 99922138.5
(22) Anmeldetag: 28.04.1999
(51) Int. Cl.: B01F 11/00, B08B 3/04, B08B 9/08, B01L 11/00

(54) **VORRICHTUNG UND VERFAHREN ZUM MISCHEN UND WASCHEN VON FLÜSSIGKEITEN UND/ODER FESTSTOFFEN UND ZUM WASCHEN VON GEFÄSSEN**
DEVICE AND METHOD FOR MIXING AND WASHING LIQUIDS AND/OR SOLIDS AND FOR WASHING CONTAINERS
PROCEDE ET DISPOSITIF POUR MELANGER ET LAVER DES LIQUIDES ET/OU DES SOLIDES, AINSI QUE POUR LAVER DES RECIPIENTS

(30) Priorität: 30.04.1998 DE 19819447
(43) Veröffentlichungstag der Anmeldung: 14.02.2001
(73) Patentinhaber: Roche Diagnostics GmbH, 68298 Mannheim (DE)
(72) Erfinder: SCHLUMBERGER, Helmut, D-82398 Polling (DE)
(86) Internationale Anmeldenummer: EP9902859
(87) Internationale Veröffentlichungsnummer: WO99056863

(56) Entgegenhaltungen:
- EP-A- 0 465 285
- WO-A-91/15768
- WO-A-97/11375
- WO-A-97/16240
- DE-U- 9 403 025
- FR-A- 1 565 187
- FR-A- 2 564 756
- GB-A- 2 081 118
- US-A- 2 545 914
- US-A- 3 116 744
- US-A- 5 261 742

## Beschreibung

Die vorliegende Erfindung fällt in das Gebiet des Mischens und Waschens von Flüssigkeiten und/oder Feststoffen. Insbesondere befaßt sich die vorliegende Erfindung mit nichtinvasiven Misch- und Waschprozessen, bei denen relativ hochviskose Flüssigkeiten involviert sind.

Die vorliegende Erfindung betrifft eine Anspruch 1 einsetzen.

Im Stand der Technik sind eine Vielzahl von Mischverfahren bekannt, wie z. B. invasive Mischverfahren, bei denen ein Rührer oder dergleichen in ein Gefäß mit den zu mischenden Substanzen eingetaucht wird. Insbesondere im Bereich der Analytik sind derartige invasive Mischverfahren nachteilig, da eine Kontamination und Verschleppung durch den Rührer hervorgerufen werden kann. Im analytischen Gebiet werden daher nichtinvasive Mischverfahren, wie beispielsweise das Vortex-Mischen, bevorzugt. Bei dieser Art des Mischens wird ein Gefäß mit dem darin befindlichen Inhalt in Bewegung versetzt. Die Bewegung kann beispielsweise ein einfaches hin- und herschwenken sein, in der Regel werden jedoch mit dem Gefäß Bewegungen in Form einer Acht oder andere Lissajoussche Figuren durchgeführt. Ein Nachteil des Vortex-Mischen liegt jedoch in den relativ starken Vibrationen die hervorgerufen werden sowie der Gefahr einer Aerosolbildung.

Im Stand der Technik sind weiterhin Mischverfahren bekannt, bei denen ein Gefäß zur Mischung der darin befindlichen Flüssigkeiten und/oder Feststoffen in eine Drehung um seine Längsachse versetzt wird. In der WO 91/15768 wird beispielsweise eine Apparatur beschrieben, mit der Probengefäße exzentrisch auf einer Motorachse angeordnet werden und mit dem Motor alternierend in und gegen den Uhrzeigersinn gedreht werden. In der US-5,580,524 ist weiterhin eine Vorrichtung beschrieben, bei der rotierbar gelagerte Gefäße gedreht werden, indem eine sich drehende Scheibe mit der Außenumfangsfläche der Gefäße in Kontakt gebracht wird. In diesem Dokument wird dargelegt, daß durch eine Umkehrung der Drehrichtung eine Suspendierung von Magnetpartikeln in einer Flüssigkeit möglich ist.

Die in den Dokumenten WO 91/15768 und US-5,580,524 beschriebenen Apparaturen besitzen den Nachteil, daß das Waschen und Mischen nicht den spezifischen Gegebenheiten des jeweiligen Gefäßinhaltes angepaßt werden kann. Es finden sich in diesen Dokumenten keine Angaben, daß der Rotationsvorgang angepaßt werden kann, um optimierte Ergebnisse zu erhalten. Die vorliegende Erfindung besitzt hingegen den Vorteil, daß über die Veränderung des Mischprozesses eine wesentliche Verbesserung der Mischeffizienz erreicht werden kann. Insbesondere ermöglicht die vorliegende Erfindung die Anwendung von Mischsequenzen, bei denen zwei oder mehr unterschiedliche Mischverfahren miteinander kombiniert werden. Es hat sich experimentell gezeigt, daß die Anwendung derartiger Mischsequenzen eine starke Erhöhung der Mischeffizienz mit sich bringt. Ein weiterer Vorteil erfindungsgemäßer Apparaturen und Verfahren ist, daß ein Verspritzen oder eine Aerosolbildung wirksam verhindert wird. Weiterhin ist es mit der Erfindung möglich, die Meniskusauslenkung der Flüssigkeit klein zu halten, so daß ein Mischen auch in relativ vollständig gefüllten Gefäßen ohne Verschluß möglich ist.

Das Anwendungsgebiet der vorliegenden Erfindung liegt, wie bereits erwähnt, vor allem im Bereich der Analytik, wo Kontaminationen durch Verschleppung oder dergleichen vermieden werden müssen. Der Bereich der Analytik soll im Sinne der Erfindung auch Vorgänge umfassen, die der eigentlichen Analyse vorausgeben, wie z. B. Verdünnen, Aufschluß oder Umsetzung von Probenmaterial. Der erfindungsgemäße Mischprozeß kann beispielsweise angewendet werden, um zwei oder mehr Flüssigkeiten miteinander zu vermischen. Von besonderer Wichtigkeit ist dies, wenn eine der zu vermischenden Flüssigkeiten eine hohe Viskosität aufweist, wie dies beispielsweise für Blut, Serum, nukleinsäurehaltige Proben, aber auch Öle und dergleichen der Fall ist. Ein weiteres wichtiges Anwendungsgebiet der vorliegenden Erfindung ist die Suspension von Partikeln in einer Flüssigkeit, um die Partikel zu waschen oder auch um sie effizient mit Inhaltsstoffen der Flüssigkeit in Kontakt zu bringen. Eine Waschung der Partikel mit der Flüssigkeit erfolgt durch Mischen von Partikeln und Flüssigkeit. Derartige Verfahren haben im Bereich der Analytik mit Magnetpartikeln eine große Bedeutung erlangt. Weiterhin kann die Erfindung auch zur Waschung der Innenwandung von Gefäßen dienen.

Zur Durchführung eines Mischverfahrens bzw. Waschverfahrens mit einer erfindungsgemäßen Vorrichtung werden die Flüssigkeiten und/oder Feststoffe zunächst in einem Mischgefäß zusammengegeben. Es ist ein besonderer Vorteil der vorliegenden Erfindung, daß an das Mischgefäß keine besonderen Anforderungen gestellt zu werden brauchen. Es können vielmehr laborübliche Reagenzgläser, Zentrifugenröhrchen Eppendorf-Tubes und dergleichen mehr eingesetzt werden. Bevorzugte Gefäßvolumina liegen zwischen 0,05 und 5 ml. Bei entsprechender Dimensionierung des Antriebes können jedoch auch wesentlich größere Volumina gemischt werden. Erfindungsgemäß werden vorzugsweise rotationssymetrische Gefäße eingesetzt. Aufgrund der erfindungsgemäßen Verfahrensführung kann das Mischen auch in nach oben offenen Gefäßen durchgeführt werden ohne das ein Verspritzen, eine Aerosolbildung oder dergleichen zu befürchten ist.

Aus der Praxis sind dem Fachmann die Probleme bekannt, die auftreten, wenn ein am Gefäßboden sedimentierter Feststoff suspendiert oder in Lösung gebracht werden soll. Das Problem ist besonders gravierend, wenn sich das Mischgefäß zum Boden hin verjüngt. Es hat sich gezeigt, daß mit der vorliegenden Erfindung sehr schnell die Suspension eines sedimentierten Feststoffes erreicht werden kann, selbst wenn sich das Mischgefäß zum Boden hin verjüngt.

Die verwendeten Mischgefäße können einen runden Innenquerschnitt aufweisen, der keine Vorsprünge oder dergleichen besitzt. Andererseits kann es auch günstig sein, innerhalb des Gefäßes Vorsprünge vorzusehen, die als sogenannte Stromstörer wirken und zu einer Intensivierung des Mischprozesses beitragen. Erfindungsgemäß ist es jedoch wichtig, daß Vorsprünge oder Kanten im Gefäßinneren unterhalb der Flüssigkeitsoberfläche liegen, da Vorsprünge oder Kanten im Bereich der Flüssigkeitsgrenzflächezu einem Verspritzen von Flüssigkeit führen können, wenn das Gefäß erfindungsgemäß alternierend in und gegen den Uhrzeigersinn gedreht wird. Es hat sich herausgestellt, daß ein Abstand der Vorsprünge oder Kanten von der Flüssigkeitsoberfläche ein oder wenige Millimeter betragen sollte. Der notwendige Abstand wird durch eine Reihe von Faktoren, wie Art der Flüssigkeit, Geschwindigkeit der Winkelauslenkung und der Größe der Stromstörer bestimmt.

Es hat sich als besonders vorteilhaft herausgestellt, Gefäße einzusetzen, bei denen der untere Teil des Gefäßes einen vieleckigen Querschnitt (insbesondere vier-, sechs- und achteckig) aufweist und das Gefäß im oberen Bereich einen runden Innenquerschnitt aufweist. Die Dimensionen des Gefäßes bzw. das Flüssigkeitsvolumen werden so gewählt, daß sich die Flüssigkeitsoberfläche in dem kreisförmigen Querschnittsbereich befindet. Derartige Gefäße fördern nicht nur den Durchmischungsprozeß, sie können auch als Küvetten eingesetzt werden. Insbesondere bei einem viereckigen Querschnitt des unteren Gefäßteiles können gegenüberliegende Seiten zum Durchstrahlen des Gefäßes verwendet werden. Mit einem derartigen Gefäß können daher sowohl Mischungen, Suspensionen, Reaktionen und eine nachfolgende Analyse durchgeführt werden.

Eine erfindungsgemäße Vorrichtung kann auch mit Mischgefäßen arbeiten, die nicht die typische Gestalt eines Röhrchens besitzen. Es hat sich gezeigt, daß im Grenzfall sogar eine planare hydrophobe Oberfläche eingesetzt werden kann, auf die ein Flüssigkeitsvolumen aufgegeben wird. Zur Durchführung des Mischprozesses wird die Oberfläche um eine Achse gedreht, die im wesentlichen senkrecht zu der Fläche verläuft, und die durch das zusammenhängende Flüssigkeitsvolumen hindurchgeht. Vorteilhaft wird die Achse so gewählt, daß sie durch den Schwerpunkt des Flüssigkeitsvolumens verläuft. Als besonders vorteilhaft hat es sich herausgestellt, wenn als Mischgefäß ein kleiner Napf (Abmessungen z. B.: Durchmesser 0,7 cm; Tiefe 0,3 cm) verwendet wird. Ein derartiges Mischgefäß bietet gegenüber einer Oberfläche den Vorteil, daß kein störendes Auseinanderlaufen von Flüssigkeit erfolgen kann und die ideale Drehachse definiert vorgegeben ist. Mit derartigen Näpfen ist insbesondere eine Verfahrensführung möglich, bei der auf der Napfinnenseite immunologische Bindungen erfolgen und überschüssiger Bindungspartner in einem Waschschritt abgetrennt wird. Das Wegwaschen überschüssiger Bindungspartner von der Napfinnenseite bzw. allgemein einer Gefäßinnenseite kann vorteilhaft mit dem erfindungsgemäßen Verfahren erfolgen. Es hat sich herausgestellt, daß diese Art der Reinigung der Gefäßinnenseite sehr effizient ist und zerstörungsfrei arbeitet, d. h. immunologische Bindungen an der Oberfläche intakt läßt.

Dementsprechend gehören auch Verfahren zum Waschen von Gefäßen zu vorliegender Erfindung, bei denen sich das Gefäß in einem Halter befindet und die Gefäßinnenwandung durch alternierendes Drehen des Gefäßes mit einer in dem Gefäß befindlichen Flüssigkeit gewaschen wird. Durch die erfindungsgemäße Einstellbarkeit der Winkelauslenkung der alternierenden Drehung kann der Waschprozess den jeweiligen Bedürfnissen angepaßt werden. Die zur Waschung der Gefäßinnenwandung erforderliche Flüssigkeit kann vor Beginn des alternierenden Drehens in das Gefäß gegeben werden. Es hat sich jedoch auch als vorteilhaft herausgestellt, die Flüssigkeit mit einer Pipette an die Gefäßinnenwandung abzugeben, während sich das Gefäß in alternierender Drehung befindet. Ein derartiges Waschverfahren kann prinzipiell für beliebige Gefäße eingesetzt werden, es hat sich jedoch als vorteilhaft herausgestellt, das Verfahren zum Waschen der Innenwandung von Gefäßen einzusetzen, bei denen zumindest ein Teil der Innenwandung der Gefäße immunologisch oder mit einer Nukleinsäuresequenz beschichtet ist.

Eine erfindungsgemäße Mischvorrichtung besitzt einen Halter für ein Mischgefäß einen Antrieb, mit dem der Halter rotiert werden kann, sowie eine Steuereinheit mit der die Bewegung des Antriebes gesteuert wird. Der Halter dient zur Aufnahme des Mischgefäßes. Zur Aufnahme eines zylindrischen Mischgefäßes kann der Halter beispielsweise ebenfalls ein Zylinder sein, der in seiner Größe so bemessen ist, daß das Mischgefäß in ihn eingestellt werden kann und die Wandungen von Mischgefäß und Halter eng aneinander anliegen. Es sind weiterhin Halter möglich, die Haltevorrichtungen zum Festhalten des Gefäßes besitzen. Derartige Haltevorrichtungen können beispielsweise Greifbacken sein, deren Abstand zueinander variabel ist um unterschiedlich große Gefäße aufzunehmen. Es ist erstrebenswert, den Halter symmetrisch um eine Achse aufzubauen, um eine Unwucht während des Mischprozesses zu vermeiden. Weiterhin sollte der Halter so beschaffen sein, daß das Mischgefäß mittig gehaltert wird und Achse des Halters und Achse des Mischgefäßes soweit wie möglich zusammenfallen.

Der Halter wird durch einen Antrieb in eine alternierende Rotation versetzt. Die maximale Drehung des Halters aus der Ruhelage bevor er beginnt sich in entgegengesetzte Richtung zu Drehen wird im Rahmen der Erfindung als Winkelauslenkung (α) bezeichnet.

Zur alternierenden Rotation kann der Halter beispielsweise direkt auf die Achse eines Motors montiert werden oder aber auf einer Unterlage drehbar gelagert und über einen Riemen oder dergleichen angetrieben sein. Es sind auch Ausführungsformen möglich, die sich an die in der US-5,580,524 beschriebenen Apparatur anlehnen. Bei solchen Ausführungsformen wird ein drehbar gelagerter Halter durch Ankopplung eines Motors an einen Zahnkranz oder eine kreisförmige Außenumfangsfläche des Halters erreicht.

Der Antrieb kann durch einen herkömmlichen Analogmotor, einen Schrittmotor, Piezomotor usw. betrieben werden. Die Dimensionierung der Antriebsmotoren richtet sich nach dem Trägheitsmoment, das der Halter und das gefüllte Mischgefäß aufweist. Ein weiteres Kriterium, das die Motoren erfüllen sollten, ist, daß ihre Winkelauslenkung bei geeigneter Ansteuerung reproduzierbar ist, um reproduzierbare Mischverhältnisse anzustreben. Dies ist für Schrittmotoren selbstverständlich der Fall, es hat sich jedoch gezeigt, daß auch für einfache Analogmotoren die Winkelauslenkung bei der alternierenden Rotation hinreichend genau kontrolliert werden kann.

Im Rahmen der Erfindung können auch Antriebe verwendet werden, die gleichzeitig zwei oder mehr Halter rotieren. Ein Beispiel für einen solchen Antrieb ist in der US-5,580,524 in Figur 5b dargestellt. Eine weitere Möglichkeit für einen derartigen Vielfachantrieb wird in dieser Anmeldung weiter unten vorgestellt.

Ein wichtiges Merkmal der vorliegenden Erfindung ist die Steuereinheit und deren Funktionsweise. Für Schrittmotoren kann als Steuereinheit eine kommerziell erhältliche Steuerkarte verwendet werden, die die Ansteuerung des Schrittmotors entsprechend dem eingegebenen Ablauf ansteuert. Derartige Kombinationen aus Steuerkarte und Schrittmotor werden als Set angeboten. Die Steuerkarten sind in der Regel so ausgebildet, daß sie direkt an die standardisieren Schnittstellen von Computern angeschlossen werden können. Eine zur Ausführung der vorliegenden Erfindung geeignete Kombination aus Schrittmotor und Steuerkarte ist beispielsweise unter dem Namen FOS-Motor-Controller von der Firma Motion erhältlich.

Analogmotoren können über eine Schaltung gesteuert werden, die ein Spannungs-Zeit-Profil liefert. Mögliche Spannungsprofile sind beispielsweise Sinus-, Rechteck- oder Sägezahnkurven. Für einen gegebenen Motor kann mit verschiedenen Spannungs-Zeit-Verläufen experimentell die Winkelauslenkung (α) ermittelt werden. Vorzugsweise wird hierzu ein Signal wie eine Sinus-, Rechteck- oder Dreieckspannung verwendet, das im wesentlichen zwei Stellgrößen, nämlich die Amplitude und Periodendauer, besitzt. Durch Variation dieser beiden Parameter können die gewünschten Winkelauslenkungen des Halters erzielt werden. Es ist beispielsweise möglich, ermittelte Parameter für bestimmte Winkelauslenkungen in Form einer Tabelle abzuspeichern, so daß, wenn ein bestimmter Auslenkungswinkel gewünscht ist, auf den entsprechenden Spannungs-Zeit-Verlauf zurückgegriffen werden kann. Wenn einer der beiden Parameter in geeigneter Größe gewählt wird, so ist es auch möglich, die Variation des Winkels in einem weiten Bereich über den zweiten Parameter zu steuern. Auf diese Weise ist es beispielsweise möglich, eine sehr einfache Mischvorrichtung aufzubauen, bei der die Änderung der Winkelauslenkung über ein einzelnes manuell bedienbares Stellglied möglich ist. Ein derartiges Stellglied kann beispielsweise ein Potentiometer sein, mit dem die Amplitude der weiter oben genannten Spannungs-Zeit-Profile geregelt wird.

Eine weitere wichtige Größe, die den Mischvorgang beeinflußt, ist die Zeit, die für eine Winkelauslenkung benötigt wird. Die Winkelauslenkung dividiert durch diese Zeit ergibt eine gemittelte Winkelgeschwindigkeit des Halters. Diese Geschwindigkeit ist zusammen mit der Winkelauslenkung von zentraler Bedeutung für den Mischeffekt. Dies wird im Zusammenhang mit den experimentellen Beobachtungen näher erläutert.

Es hat sich weiterhin herausgestellt, daß die Zahl der Rotationen des Halters in und gegen den Uhrzeigersinn von Bedeutung für das Ergebnis des Mischprozesses ist. Daher ist es vorgesehen, daß die Zahl der Winkelauslenkungen programmiert werden kann, um so zu reproduzierbaren Mischergebnissen zu gelangen. Es ist weiterhin vorteilhaft, wenn die Steuereinheit eine Speichereinheit besitzt, in der Verfahrensparameter, wie Winkelauslenkung, Zahl der Auslenkungen usw., gespeichert werden können. Es ist auch möglich, die Steuereinheit mit einem Lesegerät für Strichcodes, Magnetstreifen, Lochkarten oder dergl. zu verbinden, um so Daten betreffend die Verfahrensparameter einlesen zu können.

Im Rahmen der Erfindung hat es sich insbesondere als vorteilhaft erwiesen, Mischzyklen mit einer ersten Winkelauslenkung mit Zyklen einer zweiten Winkelauslenkung abzuwechseln. Dieser Sachverhalt wird ebenfalls im Zusammenhang mit experimentellen Beobachtungen näher diskutiert.

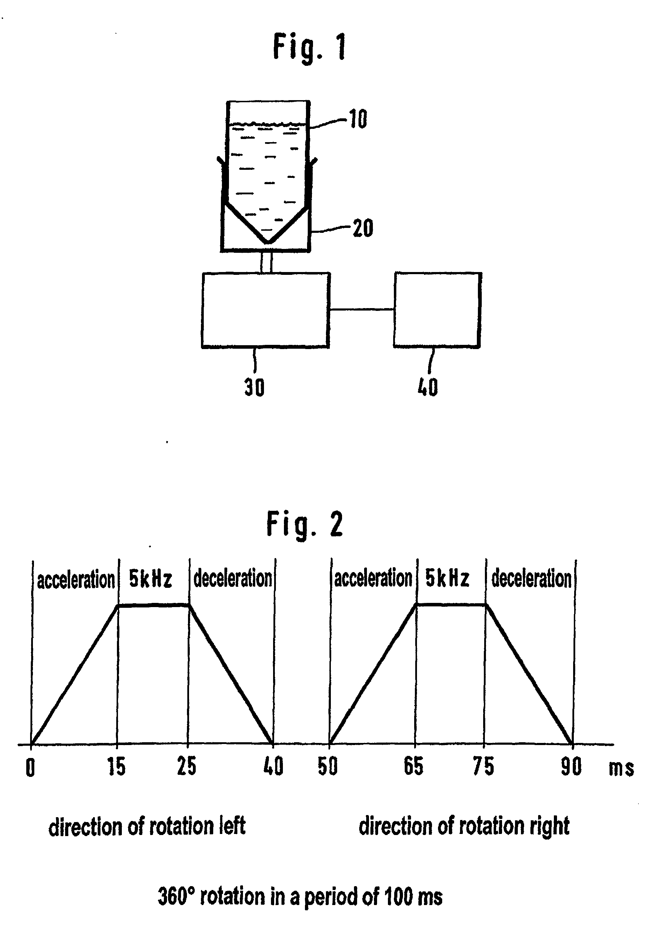

In der Figur 1 ist schematisch eine erfindungsgemäße Vorrichtung zum Mischen dargestellt. Ein Mischgefäß (10) befindet sich in dem Halter (20). Der Halter ist in diesem dargestellten Beispiel eine Kunststoffhülse, die das Mischgefäß (10) dicht umschließt. Die Kunststoffhülse ist an ihrer unteren Seite mit einem Kunststoffpropfen verschlossen, in den die Achse eines Schrittmotores (30) eingelassen ist. Der Schrittmotor (30) wird über eine Steuereinheit (40) angesteuert. Die Steuereinheit beinhaltet eine Steuerkarte für den Schrittmotor sowie einen Computer, in den die Steuerkarte eingesteckt ist. Mit der Software für die Steuerkarte ist es möglich, Programme zu kreieren, die den zeitlichen Verlauf und die Rotation des Schrittmotores (30) exakt beschreiben.

Figur 2 zeigt ein Beispiel für die Ansteuerung des Schrittmotors. Auf der X-Achse ist die Zeit in Millisekunden abgetragen und auf der Y-Achse die Schrittfrequenz des Schrittmotors. Wie Winkelauslenkung des Schrittmotors beträgt 3,6 °/Schritt und auf den in Figur 2 mit 5 kHz bezeichneten Plateaus wird somit eine Geschwindigkeit von 50 U/sec. erreicht. Das Anfahren des Schrittmotors über eine Rampe, wie in Figur 2 dargestellt, ist lediglich zur Schonung des Motors erforderlich. Zur Durchführung des erfindungsgemäßen Mischprozesses ist lediglich darauf zu achten, daß die Beschleunigung des Mischgefäßes nicht so ruckartig erfolgt, daß ein Verspritzen eintritt.

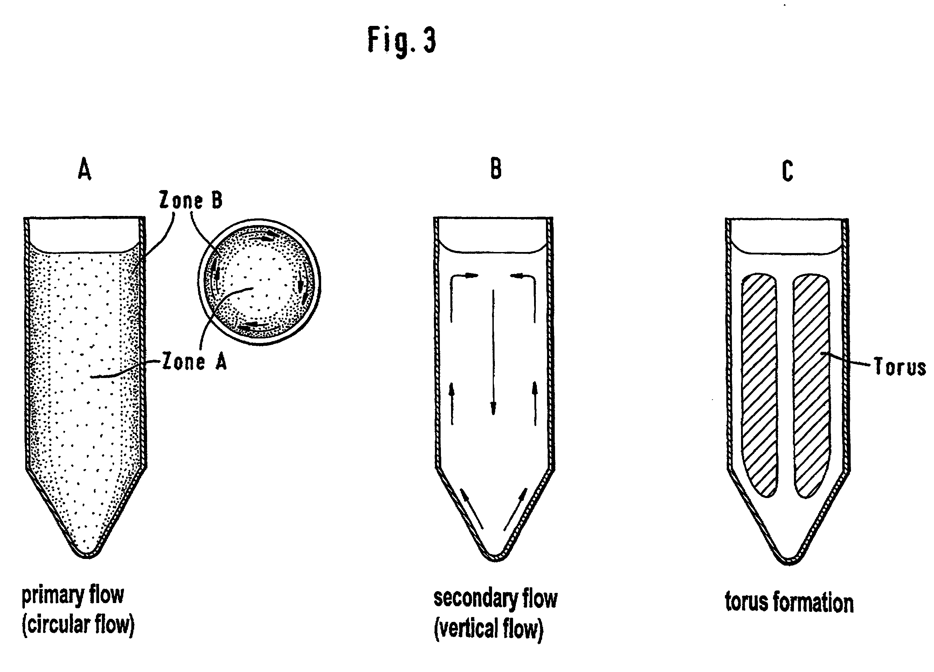

In der Figur 3 sind exemplarisch Strömungsverläufe dargestellt, wie sie mit einer Anordnung gemäß Figur 1 erhalten werden. Bei der Drehung des Mischgefäßes um seine Längsachse entsteht zunächst eine Primärströmung in Form einer Zirkularströmung (Figur 3A).

Diese Strömung wird durch die Trägheit des Gefäßinhaltes und die Scherkräfte zwischen Flüssigkeit und Wandung infolge der Gefäßdrehung hervorgerufen. Die Geschwindigkeit der Zirkularströmungen nimmt ausgehend von der Wandung in Richtung der Gefäßachse schnell ab. Bedingt durch die Ausweichströmungen und die Zentripetalkraft entsteht eine Sekundärströmung in Form einer Vertikalströmung, wie schematisch in Figur 3B dargestellt. Unabhängig von der Form des Gefäßbodens ist diese Sekundärströmung so orientiert, daß sie an der Gefäßwandung aufsteigt und in Nähe der Gefäßachse absteigt. Die Geschwindigkeit der Sekundärströmung ist im Bereich der Gefäßwandung und der Gefäßachse sowie im Bodenbereich und Oberflächenbereich der Flüssigkeit am größten. In den dazwischenliegenden Bereichen ist die Sekundärströmung relativ gering, so daß in diesen Bereichen keine oder nur eine geringe Durchmischung erfolgt. Figur 3C zeigt das Ergebnis einer alternierenden Winkelauslenkung (680 Grad in 160 ms), die mit einer gefärbten schweren Flüssigkeit (Glycerin) erhalten wurde, die mit einer farblosen leichteren Flüssigkeit (Wasser) überschichtet war. Aus Figur 3C ist zu erkennen, daß sich ein Torus unvermischter Flüssigkeit bildet, der erst nach sehr langer alternierender Rotation vermischt werden kann. Durch Änderung der Winkelauslenkung, in diesem Fall Verkleinerung der Winkelauslenkung, ist es möglich, den unvermischten Bereich mit der übrigen Flüssigkeit zu vermischen. Durch den Übergang zu einer anderen Winkelauslenkung und damit einer geänderten Rotationsgeschwindigkeit ändert sich auch die Primärströmung und der Torus kann zumindest zum Teil aufgelöst werden, da sich die Bereiche der weitestgehend in Ruhe befindlichen Flüssigkeit verschieben. Erfindungsgemäß ist es bevorzugt, Rotationszyklen bei einer ersten Winkelauslenkung mit Rotationszyklen einer zweiten Winkelauslenkung abzuwechseln, um so die Bildung unvermischter Bereiche zu vermeiden und eine effiziente Vermischung zu erzielen.

Die folgende Tabelle gibt die Kenndaten für einen erfindungsgemäßen Mischprozeß wieder, bei dem abwechselnd Zyklen unterschiedlich großer Winkelauslenkungen eingesetzt wurden. In dem Beispiel wurde in einem konisch zulaufenden Gefäß mit einem Innendurchmesser von 10 mm 1 ml Glycerin (50%ig) mit 0,5 ml Isopropanol überschichtet, das zuvor mit Methylenblau angefärbt wurde. Diese Art der Schichtung, bei der sich eine hochviskose Flüssigkeit unterhalb einer niedrigviskose Flüssigkeit befindet, stellt hohe Anforderungen an ein Mischverfahren. Eine Mischung bis zur visuell erkennbaren Homogenität konnte mit einer Vorrichtung gemäß Figur 1 bereits nach Schritt 4 der unten angegebenen Tabelle erzielt werden.

| **Schritt** | **Zeit für eine Winkelauslenkung in ms** | **Winkel in Grad** | **Periodenzahl** |
|---|---|---|---|
| 1 | 90 | 270 | 15 |
| 2 | 45 | 60 | 10 |
| 3 | 90 | 270 | 15 |
| 4 | 45 | 60 | 10 |
| 5 | 90 | 270 | 15 |
| 6 | 45 | 60 | 10 |
| 7 | 90 | 270 | 10 |

Bei dem Mischverfahren mit dem oben angegebenen Ablauf wird zunächst mit großen Winkelauslenkungen von 270° eine Sekundärströmung erzeugt, die in der Bildung eines Torus aus gefärbten Isopropanol resultiert. Durch die Zyklen mit einer Winkelauslenkung von 60° wird die in dem Torus befindliche Flüssigkeit radial mit der benachbarten Flüssigkeit vermischt.

Um die Vorzüge dieses Mischverfahrens besser zu demonstrieren, werden in der folgenden Tabelle die Ergebnisse für drei andersartige Mischzyklen dargestellt:

| **Beispiel Nr.** | **Zeit/ms** | **Winkel/°** | **Periodenzahl** | **Mischergebnis** |
|---|---|---|---|---|
| 1 | 70 | 180 | 20 | Flüssigkeiten entmischen sich beim Stillstand des Gefäßes. |
| 2 | 95 | 270 | 20 | Strudel geht fast bis zum Boden, beim Stillstand des Gefäßes jedoch wieder vollständige Entmischung. |
| 3 | 100 | 360 | 20 | Langer Strudel bis auf den Boden, Vermischung erfolgt jedoch unvollständig. |

Die optimalen Bedingungen für ein gegebenes Mischproblem können mit der folgenden Vorgehensweise gefunden werden:
1. Der Auslenkungswinkel wird ausgehend von z. B. 180° langsam erhöht, bis der sich bildende Strudel fast zum Boden geht, oder bis eine maximal zulässige Meniskusauslenkung erreicht ist.
2. Es wird geprüft, wieviel Perioden mit dem in Schritt 1 gefundenen Winkel notwendig sind, um einen Torus entstehen zu lassen. In der Regel liegt die Zahl der hierzu erforderlichen Perioden zwischen 10 und 25.
3. An ein mit dem in den Schritten 1 und 2 gefundenen Parametern definierten Zyklus wird ein Zyklus mit kurzen Winkelauslenkungen angeschlossen. Die kurzen Winkelauslenkungen sollten zwischen 40 und 100° gewählt werden. Es wird dann beobachtet, wieviel Perioden notwendig sind, um den in Schritt 2 gebildeten Torus mit der umgebenden Flüssigkeit zu vermischen.
4. Je nach gewünschter Homogenität der Mischung werden abwechselnd an die beiden beschriebenen Zyklen alternierend weitere Zyklen mit langen und kurzen Winkelauslenkungen angehängt.

Für automatisierte Geräte im Laborbetrieb wird es in der Regel nicht möglich sein, das Mischverfahren optimal an die jeweilige Probe anzupassen, da die Eigenschaften der anfallenden Proben voneinander verschieden sind. Ein Mischverfahren, das der Vielzahl der in der Praxis anfallenden Mischprobleme Rechnung trägt, besitzt Parameter in den folgenden Bereichen:

| | |
|---|---|
| Erster Zyklus | Winkelauslenkung im Bereich von 80 bis 1500°; 3 bis 30 Perioden |
| Zweiter Zyklus | Winkelauslenkung im Bereich von vorzugsweise10 bis 180°; 3 bis 30 Perioden |

Die Winkelauslenkung im zweiten Zyklus wird kleiner gewählt als im ersten Zyklus, um einen gebildeten Torus aufzulösen.

Die Zyklen 1 und 2 werden nacheinander durchlaufen. Eine derartige Sequenz aus einem Zyklus mit großer Winkelauslenkung und einem Zyklus mit kleiner Winkelauslenkung wird als Mischsequenz bezeichnet. Vorzugsweise werden mit einer Probe zwei oder mehr hintereinandergeschaltete Mischsequenzen durchgeführt.

Eine weitere wichtige Anwendung der Erfindung ist die Suspension von Partikeln, insbesondere von Magnetpartikeln in einer Flüssigkeit. Es hat sich gezeigt, daß es auch für dieses fest/flüssig-Mischproblem günstig ist, wenn die Winkelauslenkung des Halters eingestellt werden kann, um zu optimalen Ergebnissen zu gelangen. Weiterhin tritt bei der Resuspension von Partikeln ein der Torusbildung entsprechendes Problem auf. Die Partikel sammeln sich bei gleichbleibender Hin- und Herdrehung des Gefäßes in Bereichen, so daß in der Regel keine gleichmäßige Verteilung erfolgt. Häufig wird eine derartige Suspension durchgeführt, um die Partikel möglichst vollständig mit der Flüssigkeit in Kontakt zu bringen, z. B. um eine Bindung von in der Flüssigkeit enthaltenen Molekülen auf der Partikeloberfläche zu bewirken. Für Suspensionsvorgänge hat es sich wie für Mischung flüssig/flüssig als vorteilhaft erwiesen, zunächst einen Mischzyklus mit Auslenkungen um einen ersten Winkel und darauf einen oder mehrere Mischzyklen mit anderen Winkelauslenkungen durchzuführen.

Es hat sich gezeigt, daß die vorliegende Erfindung insbesondere zum Aufschluß und zur Reinigung von Nukleinsäuren verwendet werden kann. Während dieser Prozesse fallen an verschiedenen Stellen Mischungen an, deren Homogenisierung aufgrund der hohen Viskosität nukleinsäurehaltiger Flüssigkeiten schwierig ist. Es hat sich außerdem gezeigt, daß die Reproduzierbarkeit von Nukleinsäureanalysen durch Verwendung des erfindungsgemäßen Mischverfahrens erhöht wird. Ein möglicher Grund hierfür liegt darin, daß durch die auftretenden (und reproduzierbaren) Scherkräfte bei dem erfindungsgemäßen Verfahren eine Loslösung der Nukleinsäuren von den anhaftenden Proteinen erfolgt. Weiterhin sind Nukleinsäurestränge aufgrund ihrer Länge gefährdet beim Mischverfahren zerteilt zu werden. Das erfindungsgemäße Mischverfahren lieferte bei Analyseverfahren eine erhöhte Reproduzierbarkeit und Genauigkeit, was möglicherweise daran liegen könnte, daß das Zerteilen der Nukleinsäurestränge reproduzierbarer erfolgt als bei anderen Verfahren.

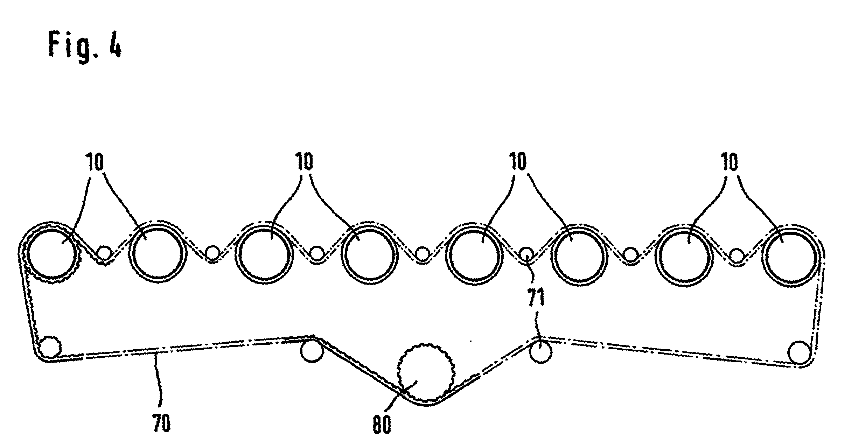

In Figur 4 ist eine Vorrichtung zum gleichzeitigen Mischen in einer Vielzahl von Probengefäßen (10) dargestellt. Die Probengefäße befinden sich bei dieser Ausführungsform in Haltern, die auf ihrer Außenfläche einen Zahnkranz tragen und die frei rotierbar gelagert sind. Die Halter sind über einen umlaufenden Zahnriemen (70) miteinander verbunden und werden gemeinsam über einen Antrieb (80) angetrieben. Der Antrieb besteht im dargestellten Beispiel aus einem Zahnrad, das auf der Achse eines Antriebsmotors montiert ist Die Steuerung des Motors kann entsprechend der für Figur 1 beschriebenen Steuerung erfolgen. Um die Spannung des Zahnriemens (70) zu halten und ein Anliegen des Zahnriemens an den Halterungen sicherzustellen, sind in der Anordnung Umlenkrollen (71) vorgesehen.

## Patentansprüche

1. Vorrichtung zum Mischen von Flüssigkeiten und/oder Feststoffen oder zum Waschen von Feststoffen mit Flüssigkeiten beinhaltend
a) einen Halter (20) für ein Mischgefäß (10), der drehbar gelagert ist, so daß ein in dem Halter (20) befindliches Mischgefäß (10) um eine Längsachse des Mischgefäßes (10) gedreht werden kann,
b) einen Antrieb (30), (80), mit dem der Halter (20) alternierend in und gegen den Uhrzeigersinn gedreht werden kann,
**dadurch gekennzeichnet, dass** eine programmierbare Steuereinheit (40), mit der die Winkelauslenkung (α) des Halters in und gegen den Uhrzeigersinn gesteuert wird,
so programmiert ist, dass eine Mischsequenz durchlaufen wird, bei der der Halter (20) in einem ersten Zyklus Winkelauslenkungen um einen ersten Winkel und in einem zweiten Zyklus Winkelauslenkungen um einen zweiten Winkel vornimmt.

2. Vorrichtung gemäß Anspruch 1, bei der die programmierbare Steuereinheit (40) die Zeit für eine Winkelauslenkung steuert.

3. Vorrichtung gemäß Anspruch 1, bei der die programmierbare Steuereinheit (40) die Zahl der Winkelauslenkungen in und gegen den Uhrzeigersinn steuert.

4. Vorrichtung gemäß Anspruch 1, bei der die programmierbare Steuereinheit (40) mit einem Tastenfeld oder einem Computer zur Programmierung verbunden ist.

5. Vorrichtung gemäß Anspruch 1, bei der die programmierbare Steuereinheit (40) mit einem Lesegerät verbunden ist, mit dem Daten von einem Datenträger zur Programmierung der Steuereinheit eingelesen werden.

6. Verfahren zum Mischen von Flüssigkeiten und/oder Feststoffen oder zum Waschen von Feststoffen mit Flüssigkeiten mit den Schritten
a) Einbringen der zu mischenden Flüssigkeiten und/oder Feststoffe in ein Mischgefäß (10)
b) Einsetzen des Mischgefäßes (10) in einen drehbar gelagerten Halter (20),
c) Alternierendes Drehen des Halters (20) mit einem Antrieb (30), (80) in und gegen den Uhrzeigersinn,
**dadurch gekennzeichnet, daß** der Antrieb (30), (80) durch eine programmierbare Steuereinheit (40) gesteuert wird, die die Winkelauslenkung in und gegen den Uhrzeigersinn entsprechend ihrer Programmierung steuert; und bei dem Verfahren eine Mischsequenz durchlaufen wird, bei der der Halter (20) in einem ersten Zyklus Winkelauslenkungen und einen ersten Winkel und in einem zweiten Zyklus Winkelauslenkungen um einen zweiten Winkel vornimmt.

7. Verfahren gemäß Anspruch 6, bei dem die Steuereinheit (40) die Zeit für eine Winkelauslenkung steuert.

8. Verfahren gemäß Anspruch 6, bei dem die Steuereinheit (40) die Zahl der Winkelauslenkungen steuert.

9. Verfahren gemäß Anspruch 6, bei dem der ersten Winkel größer ist als der zweite Winkel.

10. Verfahren gemäß Anspruch 6, bei dem der erste Winkel zwischen 80 und 1500 Grad liegt.

11. Verfahren gemäß Anspruch 6, bei dem der zweite Winkel zwischen 10 und 180 Grad liegt.

12. Verfahren gemäß Anspruch 6, bei dem die erste Zahl von Winkelauslenkungen zwischen 1 und 30 liegt.

13. Verfahren gemäß Anspruch 6, bei dem die zweite Zahl von Winkelauslenkungen zwischen 1 und 30 liegt.

14. Verfahren gemäß Anspruch 6, bei dem nach Durchlaufen der Mischsequenz eine oder mehrere weitere Mischsequenzen durchlaufen werden.

15. Verfahren gemäß Anspruch 6, bei dem der erste Winkel so gewählt wird, daß ein durch die alternierenden Winkelauslenkungen gebildeter Strudel bis in die Nähe des Gefäßbodens reicht.

16. Verfahren gemäß Anspruch 6, bei dem das Einbringen der Flüssigkeit erfolgt, während sich das Gefäß in alternierender Drehung befindet.

17. Verfahren gemäß Anspruch 6 oder 16, bei dem das Einbringen der Flüssigkeit mit einer Pipette an die Gefäßinnenwand erfolgt.

## Claims

1. Device for mixing liquids and/or solids or for washing solids with liquids comprising
a) a holder (20) for a mixing vessel (10) which is rotatably mounted such that a mixing vessel (10) located in the holder (20) can be rotated about a longitudinal axis of the mixing vessel (10),
b) a drive (30), (80) which can rotate the holder (20) alternately in a clockwise and anti-clockwise direction,
**characterized in that** a programmable control unit (40) which regulates the angular displacement (α) of the holder in a clockwise and anti-clockwise direction, is programmed such that a mixing sequence is carried out in which the holder (20) performs angular displacements of a first angle in a first cycle and performs angular displacements of a second angle in a second cycle.

2. Device as claimed in claim 1, in which the programmable control unit (40) controls the time for an angular displacement.

3. Device as claimed in claim 1, in which the programmable control unit (40) controls the number of angular displacements in a clockwise and anti-clockwise direction.

4. Device as claimed in claim 1, in which the programmable control unit (40) is connected to a keyboard or to a computer for programming.

5. Device as claimed in claim 1, in which the programmable control unit (40) is connected to a reader which is used to read in data from a data carrier in order to program the control unit.

6. Process for mixing liquids and/or solids or for washing solids with liquids comprising the steps
a) introducing the liquids and/or solids that are to be mixed into a mixing vessel (10)
b) inserting the mixing vessel (10) into a rotatably mounted holder (20),
c) alternately rotating the holder (20) with a drive (30), (80) in a clockwise and anti-clockwise direction,
**characterized in that** the drive (30), (80) is controlled by a programmable control unit (40) which controls the angular displacement in a clockwise and anti-clockwise direction according to its programming and wherein a mixing sequence is carried out in the process in which the holder (20) performs angular displacements of a first angle in a first cycle and performs angular displacements of a second angle in a second cycle.

7. Process as claimed in claim 6, in which the control unit (40) controls the time for an angular displacement.

8. Process as claimed in claim 6, in which the control unit (40) controls the number of angular displacements.

9. Process as claimed in claim 6, in which the first angle is larger than the second angle.

10. Process as claimed in claim 6, in which the first angle is between 80 and 1500 degrees.

11. Process as claimed in claim 6, in which the second angle is between 10 and 180 degress.

12. Process as claimed in claim 6, in which the number of angular displacements is between 1 and 30.

13. Process as claimed in claim 6, in which the second number of angular displacements is between 1 and 30.

14. Process as claimed in claim 6, in which one or more additional mixing sequences are carried out after the mixing sequence has been carried out.

15. Process as claimed in claim 6, in which the first angle is selected such that a vortex formed by the alternating angular displacements reaches near to the bottom of the vessel.

16. Process as claimed in claim 6, in which the liquid is introduced while the vessel is rotated alternately.

17. Process as claimed in claim 6 or 16, in which the liquid is introduced with a pipette on the inner wall of the vessel.

## Revendications

1. Dispositif pour mélanger les liquides et/ou des solides ou pour laver des solides avec des liquides, contenant
a) un support (20) pour un récipient de mélange (10), qui est monté de façon à pouvoir tourner, de sorte qu'un récipient de mélange (10) se trouvant dans le support (20) peut être tourné autour d'un axe longitudinal du récipient de mélange (10),
b) un mécanisme d'entraînement (30, 80), avec lequel le support (20) peut être tourné en alternance dans le sens rétrograde et direct,
**caractérisé en ce qu'**une unité de commande programmable (40) avec laquelle l'excursion angulaire (α) du support est commandée dans le sens rétrograde et direct, est programmée de telle façon à exécuter une séquence de mélange pendant laquelle le support (20) procède à des excursions angulaires autour d'un premier angle dans un premier cycle et dans un deuxième cycle, à des excursions angulaires autour d'un deuxième angle.

2. Dispositif selon la revendication 1, dans lequel l'unité de commande programmable (40) commande la durée d'une excursion angulaire.

3. Dispositif selon la revendication 1, dans lequel l'unité de commande programmable (40) commande le nombre d'excursions angulaires dans le sens rétrograde et direct.

4. Dispositif selon la revendication 1, dans lequel l'unité de commande programmable (40) est raccordée à un clavier à touches ou à un ordinateur en vue d'une programmation.

5. Dispositif selon la revendication 1, dans lequel l'unité de commande programmable (40) est raccordée à un appareil de lecture avec lequel des données provenant d'un support de données sont lues en vue de programmer l'unité de commande.

6. Procédé pour mélanger des liquides et/ou des solides ou pour laver des solides avec des liquides avec les étapes :
a) introduction des liquides et/ou des solides à mélanger dans un récipient de mélange (10)
b) insertion du récipient de mélange (10) dans un support monté de façon à pouvoir tourner (20),
c) rotation alternante du support (20) avec un mécanisme d'entraînement (30), (80) dans le sens rétrograde et direct,
**caractérisé en ce que** le mécanisme l'entraînement (30), (80) est commandé par une unité de commande programmable (40), qui commande l'excursion angulaire dans le sens rétrograde et direct conformément à sa programmation; et une séquence de mélange est exécutée pendant le procédé, dans laquelle le support (20) procède à des excursions angulaires autour d'un premier angle dans un premier cycle, et dans un deuxième cycle procède à des excursions angulaires autour d'un deuxième angle.

7. Procédé selon la revendication 6, dans lequel l'unité de commande (40) commande la durée d'une excursion angulaire.

8. Procédé selon la revendication 6, dans lequel l'unité de commande (40) commande le nombre d'excursions angulaires.

9. Procédé selon la revendication 6, dans lequel le premier angle est supérieur au deuxième angle.

10. Procédé selon la revendication 6, dans lequel le premier angle est compris entre 80 et 1500 degrés.

11. Procédé selon la revendication 6, dans lequel le deuxième angle est compris entre 10 et 180 degrés.

12. Procédé selon la revendication 6, dans lequel le premier nombre d'excursions angulaires est compris entre 1 et 30.

13. Procédé selon la revendication 6, dans lequel le deuxième nombre d'excursions angulaires est compris entre 1 et 30.

14. Procédé selon la revendication 6, dans lequel, après exécution de la séquence de mélange, une ou plusieurs autres séquences de mélange sont exécutées.

15. Procédé selon la revendication 6, dans lequel le premier angle est choisi de telle façon qu'un tourbillon formé par les excursions angulaires alternantes parvient jusqu'au voisinage du fond du récipient.

16. Procédé selon la revendication 6, dans lequel l'introduction du liquide a lieu pendant que le récipient se trouve en rotation alternante.

17. Procédé selon la revendication 6 ou 16, dans lequel l'introduction du liquide a lieu avec une pipette au niveau de la paroi interne du récipient.
